# EUROPÄISCHE PATENTSCHRIFT

(11) **EP 1 331 211 B1**
(45) Veröffentlichungstag und Bekanntmachung des Hinweises auf die Patenterteilung: **21.04.2010**
(21) Anmeldenummer: 03000481.6
(22) Anmeldetag: 11.01.2003
(51) Int. Cl.: C04B 35/589, F16C 33/04, F16C 33/30, C04B 35/571

(54) **Verfahren zur Herstellung keramischer Lagerbauteile**
A process for production of ceramic bearing components
Procédé de fabrication d'un élément céramique de palier

(30) Priorität: 25.01.2002 DE 10203473
(43) Veröffentlichungstag der Anmeldung: 30.07.2003
(60) Teilanmeldung: 09012064.3
(73) Patentinhaber: AB SKF, 415 03 Göteborg (SE)
(72) Erfinder: Gegner, Jügen, Dr., 90765 Fürth (DE)
(74) Vertreter: Gosdin, Michael

(56) Entgegenhaltungen:
- EP-A- 1 310 469
- DE-A1- 2 803 658
- DE-A1- 4 318 974
- DE-A1- 19 855 811

## Beschreibung

Die Erfindung betrifft ein Verfahren zur Herstellung keramischer Lagerbauteile.

Sowohl bei Gleitlager- als auch bei Wälzlageranwendungen ist es bereits bekannt, Lagerbauteile aus Keramik einzusetzen. Bei den Lagerbauteilen kann es sich beispielsweise um Wälzkörper oder um Lagerringe eines keramischen Wälzlagers eines Hybrid-Wälzlagers (Ringe aus Wälzlagerstahl) oder eines Gleitlagers handeln. Nach dem Stand der Technik werden solche Lagerbauteile aus gesinterter und heißgepresster Keramik hergestellt, u. a. wegen der guten Ermüdungs- und Abbriebbeständigkeit (hoher Verschleißwiderstand, geringe Verschleißrate) bevorzugt aus Siliziumnitrid. Verbreitet werden heißgepresstes (HPSN), heißisostatisch gepresstes (HIPSN) und direkt gesintertes Siliziumnitrid (SSN) verwendet. Daneben können keramische Lagerbauteile auch beispielsweise aus Zirkonoxid, Aluminiumoxid und Siliziumcarbid gefertigt werden.

Die EP 0 366 443 B1 offenbart keramische Lagerbausteine und ein Verfahren zur Herstellung derartiger Lagerbausteine. Die Lagerbausteine zeichnen sich dadurch aus, dass sie aus einem keramischen Material gebildet werden, das einen Gehalt an metallischen Bestandteilen in einer Menge von 3500 ppm oder weniger hat und das mehrere der Elemente Eisen, Nickel, Chrom und Wolfram enthält. Bei dem offenbarten Verfahren für die Herstellung eines keramischen Wälzlagerbausteins wird keramisches Rohmaterialpulver in eine Schlemmenform umgewandelt. Die Schlemme wird granuliert, zu einer gewünschten Gestalt geformt und gesintert. Während des Verfahrens werden metallische Bestandteile auf einen Restwert von 3500 ppm oder weniger reduziert.

Aus der nicht vorveröffentlichten EP 1 310 469 A2 ist ein Verfahren zur Herstellung keramischer Lagerbauteile bekannt, bei dem ein Stoffgemisch hergestellt wird, das eine metallorganische Verbindung als präkeramische Vorstufe und einen chemisch reaktiven Füllstoff enthält. Das Stoffgemisch wird einer Reaktionspyrolyse unterzogen. Bei dem chemisch reaktiven Füllstoff kann es sich beispielsweise um ein Metallsilizid, insbesondere um ein Eisensilizid handeln.

Die DE 198 55 811 offenbart ein Verfahren zur Herstellung reaktionsgebundener Werkstoffe auf Basis von Siliziumnitrid. Bei diesem Verfahren wird eine Mischung aus Silizium, organischen Siliziumverbindungen und Siliziumnitrid in stickstoffhaltiger Atmosphäre thermisch behandelt.

Aus der DE 43 18 974 ist ein Verfahren zur Herstellung von Formkörpern bekannt, die keramische und/oder metallische Materialien und metallorganische Verbindungen als Bindemittel enthalten. Das Verfahren zeichnet sich dadurch aus, dass vor und/oder während der Homogenisierung der Ausgangsstoffe ein Weichmacher zugegeben wird.

Obwohl sich keramische Lagerbauteile bereits vielfach bewährt haben, weil sie auch unter extremen Bedingungen, wie beispielsweise hohe Temperaturen oder Schmiermittelverlust eine vergleichsweise hohe Lebensdauer aufweisen, beschränkt sich der Einsatz von keramischen Lagerbauteilen bislang hauptsächlich auf den Bereich von Spezialanwendungen. Dies ist darin begründet, dass die Herstellungskosten der Lagerbauteile bei Anwendung bekannter Herstellungsverfahren deutlich über den Herstellungskosten für vergleichbare Lagerbauteile aus Stahl liegen.

Der Erfindung liegt die Aufgabe zugrunde, ein Verfahren zur Herstellung keramischer Lagerbauteile anzugeben, das kostengünstig ist und dennoch die im Bereich der Lagertechnik bestehenden hohen Qualitätsanforderungen erfüllt.

Diese Aufgabe wird durch ein Verfahren mit den Verfahrensschritten gemäß Anspruch 1 erfüllt.

Beim erfindungsgemäßen Verfahren wird zur Herstellung keramischer Lagerbauteile ein Stoffgemisch, aus einer metallorganischen Verbindung als präkeramische Vorstufe und einem chemisch reaktivem Füllstoff hergestellt. Das Stoffgemisch wird einer Reaktionspyrolyse unterzogen und dadurch in keramisches Material überführt. Als chemisch reaktiver Füllstoff wird Silizium in Form einer Legierung und ein Metall in Elementform, in Form einer Legierung, in Form einer intermetallischen Phase oder in Form einer beliebigen chemischen Verbindung eingesetz. Das Atomverhältnis von Metall zu Silizium liegt kleiner als 1:2, insgesamt auf der Seite von Silizium. Damit können Lagerbauteile insbesondere auf der Basis von Siliziumnitrid und Siliziumcarbid hergestellt werden.

Bevorzugt werden Siliziumnitrid-Basiskeramiken gefertigt. Das Volumenverhältnis von metallorganischer Verbindung zu Füllstoff liegt typischerweise im Bereich um 50 %, eher verschoben zugunsten der organischen Vorstufe. Bei der Reaktionspyrolyse findet eine thermische Umsetzung (Thermolyse) des Polymers in ein keramisches Material statt.

Diese Vorgehensweise hat den Vorteil, dass der Herstellungsprozess verglichen mit bei der Herstellung keramischer Lagerbauteile herkömmlicher Weise eingesetzten Sinter- und Heißpressverfahren schneller abläuft und auch wegen merklich niedrigerer Temperaturen verglichen mit typischen Sintertemperatüren für Siliziumnitrid von 1700 °C bis 2000 °C einen deutlich geringeren Energieeinsatz sowie eine wesentlich unempfindlichere und daher entschieden weniger aufwendige Prozessführung erfordert. Zudem sind die verwendeten Ausgangsstoffe vergleichsweise kostengünstig. Ein weiterer Vorteil besteht darin, dass es bei geeigneten Prozessbedingungen während der pyrolytischen Keramisierung kaum zu einer Schwindung kommt, wobei allerdings, speziell bei einfachen Formkörpern, wie beispielsweise aus Stangen oder Stäben hergestellte Rollen oder Kugeln für Wälzlager, auch kontrolliert größere Volumenänderungen zugelassen werden können.

Das Stoffgemisch kann eine vernetzende metallorganische, insbesondere siliziumorganische Verbindung wie beispielsweise ein Silicon oder Polysiloxan als präkeramische Vorstufe enthalten. Besonders gut eignen sich Siliconharze oder Polysilsesquioxane u. a. wegen der an Luft durchführbaren Vorverarbeitung (Feuchtigkeitsunempfindlichkeit, Hydrolysestabilität) und sind zudem dank entsprechender Verfügbarkeit vergleichsweise kostengünstig erhältlich. Sie sind in fester und flüssiger Form mit unterschiedlicher Viskosität erhältlich und erlauben über ihr breites Zusammensetzungsspektrum neben dem Siliziumgehalt insbesondere die Auswahl verschiedener Kohlenstoff- und Sauerstoffanteile.

Die metallische Komponente wird speziell zur Bildung beispielsweise von Carbiden, Nitriden oder Oxiden während der Reaktionspyrolyse beigegeben. Insbesondere kann das Stoffgemisch als chemisch reaktiver Füllstoff ein Metallsilizid enthalten. Als Metall werden in der Regel Übergangsmetalle (z. B. Chrom, Eisen, Molybdän, usw.) verwendet, da sie als Zusatzelemente im Rahmen der Reaktionspyrolyse die Nitridierung (Stickstoff-Atmosphäre) des Siliziums katalysieren. Insbesondere eignet sich Eisen, d. h. es wird bevorzugt eine Silizium/Eisen- oder Silizium/Eisen/Eisensilizid-Mischung eingesetzt, wobei die Silizium/Eisen-Komponente aus den Elementen oder einer Legierung bestehen kann. Technisch ist hierfür die Bezeichnung Ferrosilizium (FeSi: u. a. eingesetzt als Löthilfsstoff, kostengünstig erhältlich) gebräuchlich. Jeweils wird das Mischungsverhältnis, gegebenenfalls auch je nach mittlerer chemischer Zusammensetzung des Eisensilizid-Materials, typischerweise entsprechend einem Atomverhältnis zwischen Silizium und Eisen von etwa 2:1 (entspricht ungefähr FeSi50; Siliziumanteil wie technisch üblich in Gew.-% bezeichnet) oder darüber (d. h. mehr Silizium, z. B. FeSi75) gewählt. Speziell für die Silizium/Eisen-Mischung ist es wichtig, dass Stickstoff (reaktive Gasatmosphäre) durch Eisen für die Füllstoffreaktion aktiviert wird, wobei ein bestimmter Eisenrest im keramischen Pyrolysat verbleiben kann. Die Verwendung einer Silizium/Eisen- oder Silizium/Eisen/Eisensilizid-Mischung hat wiederum den Vorteil, dass diese Materialien sehr kostengünstig verfügbar sind. Hier ist beispielsweise an den Einsatz geeigneter industrieller Rückstände u. a. aus der Stahlindustrie (erzeugend und verarbeitend), der Silizium-, Wafer- und Halbleiterindustrie zu denken, gegebenenfalls nach entsprechender Aufbereitung. Dabei ist zu beachten, dass Legierungs- und Begleitelemente des Stahls, wie z. B. Chrom, Molybdän, Aluminium, Silizium und auch Kohlenstoff, sowie eventuell beigemischte Schleifmittelrückstände, speziell Siliziumcarbid, für die weitere Verwendung im Rahmen des erfindungsgemäßen Verfahrens günstige Füllstoffwirkung (chemisch reaktiv oder inert) zeigen und organische Restbestandteile thermisch mitumgesetzt Ferrosilizium (FeSi: u. a. eingesetzt als Löthilfsstoff, kostengünstig erhältlich) gebräuchlich. Jeweils wird das Mischungsverhältnis, typischerweise entsprechend einem Atomverhältnis zwischen Silizium und Eisen von etwa 2:1 (entspricht ungefähr FeSi50; Siliziumanteil wie technisch üblich in Gew.-% bezeichnet) oder darüber (d. h. mehr Silizium, z. B. FeSi75) gewählt. Speziell für die Silizium/Eisen-Mischung ist es wichtig, dass Stickstoff (reaktive Gasatmosphäre) durch Eisen für die Füllstoffreaktion aktiviert wird, wobei ein bestimmter Eisenrest im keramischen Pyrolysat verbleiben kann. Die Verwendung einer Silizium/Eisen-Mischung hat wiederum den Vorteil, dass diese Materialien sehr kostengünstig verfügbar sind. Hier ist beispielsweise an den Einsatz geeigneter industrieller Rückstände u. a. aus der Stahlindustrie (erzeugend und verarbeitend), der Silizium-, Wafer- und Halbleiterindustrie zu denken, gegebenenfalls nach entsprechender Aufbereitung. Dabei ist zu beachten, dass Legierungs- und Begleitelemente des Stahls, wie z. B. Chrom, Molybdän, Aluminium, Silizium und auch Kohlenstoff, sowie eventuell beigemischte Schleifmittelrückstände, speziell Siliziumcarbid, für die weitere Verwendung im Rahmen des erfindungsgemäßen Verfahrens günstige Füllstoffwirkung (chemisch reaktiv oder inert) zeigen und organische Restbestandteile thermisch mitumgesetzt werden. Der chemisch reaktive Füllstoff kann in Pulverform mit einer Korngröße im Bereich um 1 µm bis mehrere 10 µm verarbeitet werden.

Darüber hinaus kann das Stoffgemisch weitere chemisch reaktive Füllstoffe, wie z. B. Aluminium (kostengünstig, u. a. zur Bildung von Aluminiumoxid mit dem im Siliconharz enthaltenen Sauerstoff) enthalten. Ebenso kann das Stoffgemisch wenigstens einen Inertfüllstoff enthalten, der in Pulverform oder auch als Faser, insbesondere als Kurzfaser verarbeitet werden kann. Dies dient der Verbesserung der Werkstoffermüdungs- und Verschleißbeständigkeit. Insbesondere können Zirkonoxid und/oder Aluminiumoxid und/oder Siliziumcarbid und/oder Siliziumnitrid (letzteres begünstigt auch die Keimbildung von Siliziumnitrid im Rahmen der Reaktionspyrolyse in Stickstoffatmosphäre) zur Verbesserung der mechanischen Eigenschaften und/oder der Reaktionskinetik feinverteilt beigegeben werden. Durch geeignete Wahl der Füllstoffkombination und Pyrolysebedingungen (Temperaturregelung und Drucksteuerung, z. B. Stickstoff-Atmosphäre) lassen sich u. a. das Schwindungsverhalten, die mechanischen und die elektrischen Eigenschaften (speziell mit dem Ziel einer möglichst geringen Leitfähigkeit der hergestellten Lagerkomponenten) der polymerabgeleiteten Keramik sehr effizient weiter optimieren. Dies gilt ebenfalls für weitere Werkstoffkennwerte des Endprodukts, wie den thermischen Ausdehnungskoeffizienten oder die Wärmeleitfähigkeit sowie für die magnetischen Eigenschaften. In diese Materialoptimierung kann auch die chemische Zusammensetzung der verwendeten metallorganischen Verbindung einbezogen werden.

Die Anmischung des Stoffgemisches, je nach Form des Polysilsesquioxans (flüssig mit unterschiedlicher Viskosität, Feststoffharz) und Volumenanteil des Füllstoffs (typischerweise im Bereich um 30 % bis 50 %) z. B. in eine Suspension, Lösungsmitteldispergierung, Warmflüssig- oder Trockenmischung, kann etwa durch Kneten, Rühren, Intensivmischen o. ä. erfolgen. Dabei ist besonders auf Homogenität der Mischung zu achten. Je nach Form des Stoffgemisches kann sich als Nachbereitung eine Entgasung, Trocknung bzw. Extrusion und Granulierung anschließen.

Die Reaktionspyrolyse kann wenigstens teilweise in einer chemisch reaktiven Gasatmosphäre durchgeführt werden, wobei sich speziell eine Stickstoffatmosphäre eignet. Durch die Gasatmosphäre werden weitere Reaktionspartner zur Verfügung gestellt, insbesondere mit dem Ziel der Herstellung von Keramikmaterial auf Nitridbasis, bevorzugt Siliziumnitrid. Im Sinne einer möglichst effizient ablaufenden Reaktion ist es dabei vorteilhaft, wenn die Reaktionspyrolyse unter Überdruck von typischerweise einigen bar bis etwa 50 bar (möglich sind allerdings Atmosphärendrücke von einigen 100 bar) durchgeführt wird. Insbesondere kann der Prozess, beispielsweise orientiert an optimalen Nitridierungsverhältnissen und Reaktionspyroloyse auch wenigstens teilweise in einer chemisch inerten Gasatmosphäre oder im Vakuum durchgeführt werden.

Die Endtemperatur der Pyrolyse, die typischerweise über einige Stunden eingehalten wird, liegt zwischen 1000 °C und 1700 °C, bevorzugt zwischen 1200 °C und 1500 °C. Aus wirtschaftlichen Erwägungen ist es wegen der einfacheren Ofentechnik grundsätzlich vorzuziehen, eine Temperatur von 1400 °C bis 1500 °C möglichst nicht zu überschreiten. Auch hier kann, z. B. wegen Bereichen vorübergehender offener Porosität und u. a. mit dem Ziel eines möglichst weitreichenden Austreibens von Sauerstoff (falls dies, abhängig auch von der eingesetzten Füllstoffkombination, gewünscht ist), ein temperaturgesteuertes mehrstufiges Verfahren gewählt werden, d. h. die Temperatur kann variiert werden. Vorab kann eine Wärmebehandlung etwa im Bereich von 400 °C bis 1000 °C mit Haltezeiten in der Größenordnung 1 Stunde durchgeführt werden, speziell um dabei Temperaturfenster offenen Porosität hinsichtlich der Reaktionsfähigkeit mit reaktiven Atmosphären-Gas (bevorzugt Stickstoff) auszunützen. Die beschriebene Vorgehensweise hat den Vorteil, dass ein qualitativ besonders hochwertiges, beispielsweise praktisch restpolymerfreies Keramikmaterial erzeugt wird. Es liegt in Form eines mikroskopisch strukturierten keramischen Werkstoffes, gegebenenfalls mit geringem metallischem Anteil vor, im Falle der Verwendung einer geeigneten siliziumorganischen Vorstufe mit Silizium/Metall-Mischung als chemisch reaktivem Füllstoff und Stickstoffatmosphäre bestehend aus überwiegend Siliziumnitrid und Carbid. Je nach Wahl der Reaktionspartner und Prozessbedingungen kann sauerstoffhaltiges oder sauerstofffreies keramisches Material hergestellt werden bzw. ein geringer Anteil an Restpolymer im Verbundwerkstoff erhalten bleiben. An die Reaktionspyrolyse kann sich ein konventionelles Nachsintern anschließen.

Vor der Reaktionspyrolyse kann eine erste, bereits grob am Lagerbauteil orientierte Formgebung des Stoffgemisches, z. B. durch Pressen oder Gießen, und anschließend eine Härtung der im Stoffgemisch enthaltenen metallorganischen Verbindung durchgeführt werden. Diese Stabilisierung zum möglichst porenfreien Grünbauteil kann mit oder ohne Gewichtsverlust erfolgen und insbesondere unter Druck und durch Wärmezufuhr bei einer Temperatur von etwa 100 °C bis 300 °C durchgeführt werden. Alternativ dazu oder ergänzend kann die Härtung auch durch Strahlungseinwirkung vollzogen sowie durch Zusätze gefördert werden. Im Rahmen der Härtung kann aus dem Stoffgemisch ein formstabiles Halbzeug hergestellt werden, aus dem vor Durchführung der Reaktionspyrolyse durch mechanische Bearbeitung die Lagerbauteile in ihren Abmessungen endzustandsnah gefertigt werden. Dies hat den Vorteil, dass die zur Herstellung der Lagerbauteile erforderliche mechanische Bearbeitung größtenteils mit konventionellen industrieüblichen Verfahren, z. B. spanabhebend mit geringem Werkzeugverschleiß, an dem relativ weichen Grünbauteil stattfindet und nicht an dem harten, spröden Keramikprodukt. Dies erleichtert die Bearbeitung wesentlich, so dass eine effiziente und kostengünstige Fertigung möglich ist.

Die Bestandteile des Stoffgemisches können so aufeinander abgestimmt werden, dass die Lagerbauteile bei der Durchführung der Reaktionspyrolyse keiner nennenswerten Schwindung ausgesetzt sind oder eine kontrollierte, maßgeschneidert an der abschließenden Feinbearbeitung orientierte, geringe Volumenänderung erfahren. Dies hat den Vorteil, dass das vernetzte Grünbauteil nahezu bis auf Endmaß bearbeitet werden kann. Nach der Durchführung der Reaktionspyrolyse kann dann eine mechanische Feinbearbeitung (z. B. Schleifen, Honen, Läppen) der keramisierten Lagerbauteile erfolgen. Dabei ist aber nur noch ein relativ geringer Materialabtrag erforderlich. Insbesondere bei der Herstellung einfacher Formkörper, wie beispielsweise aus Stangen oder Stäben gefertigte Rollen und Kugeln für Wälzlager, können auch kontrolliert größere Schwindungen oder auch eine Volumenausdehnung auf ein gewünschtes Zielmaß vorgesehen werden. Zur Verbesserung der mechanischen Eigenschaften kann das keramische Produkt vor oder nach der mechanischen Feinbearbeitung kugelgestrahlt werden, wodurch risshemmende Druckeigenspannungen im Randbereich eingebracht werden. einfacher Formkörper, wie beispielsweise aus Stangen oder Stäben gefertigte Rollen und Kugeln für Wälzlager, können auch kontrolliert größere Schwindungen oder auch eine Volumenausdehnung auf ein gewünschtes Zielmaß vorgesehen werden. Zur Verbesserung der mechanischen Eigenschaften kann das keramische Produkt vor oder nach der mechanischen Feinbearbeitung kugelgestrahlt werden, wodurch risshemmende Druckeigenspannungen im Randbereich eingebracht werden.

Zur Herstellung von Lagerbauteilen auf Siliziumnitridbasis eignen sich prinzipiell auch Polysilazane als siliziumorganische Vorstufe. Ihr Einsatz ist allerdings im Vergleich zu Siliconharzen mit höheren Kosten für das Ausgangsmaterial und einer aufwendigeren Weiterverarbeitung (z. B. Feuchteempfindlichkeit) verbunden.

Zur Darstellung von Lagerbauteilen auf Siliziumcarbidbasis aus siliziumorganischen Vorstufen wird die Reaktionspyrolyse bevorzugt unter Schutzgas (Inertgasatmosphäre, z. B. Argon) oder im Vakuum durchgeführt. Als chemisch reaktiver Füllstoff eignet sich u. a. Silizium. Es können Polysilane oder Polycarbosilane als siliziumorganische Vorstufen verwendet werden, die aber wiederum zu deutlich höheren Kosten führen. Deshalb sind auch in diesem Fall aus wirtschaftlichen Gründen vernetzende Silicone, Siliconharze oder Polysilsesquioxane, vorzuziehen.

Es ist somit möglich, mit dem erfindungsgemäßen Verfahren keramische Lagerbauteile für Standardanwendungen sowie für Spezialanwendungen mit dann auch an die entsprechenden besonderen Forderungen angepassten und gegebenenfalls beispielsweise in bestimmten mechanischen Kennwerten gezielt modifizierten Materialeigenschaften herzustellen.

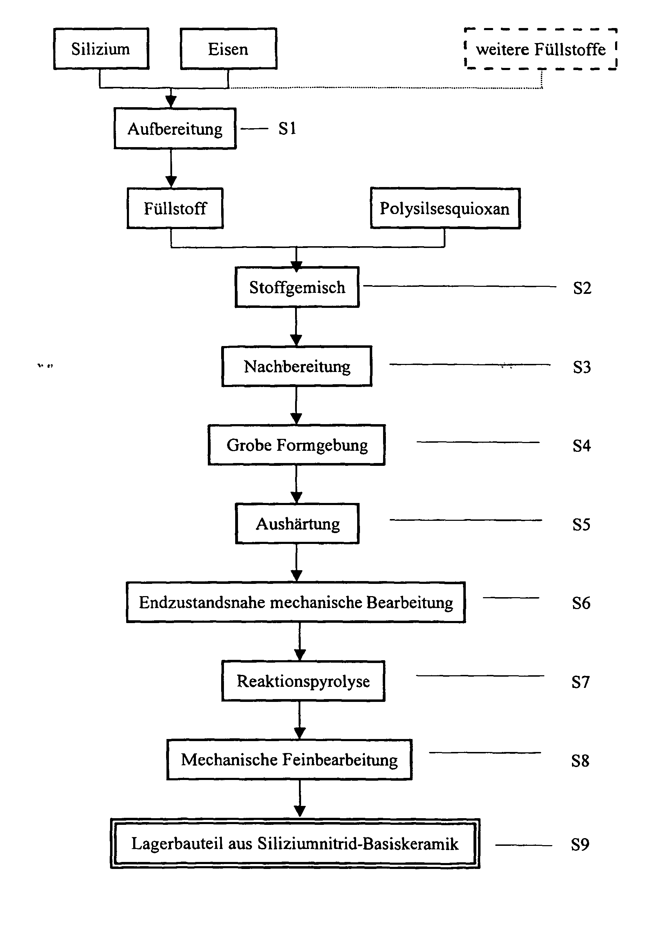

Die Erfindung wird nachstehend anhand des in der Zeichnung dargestellten Ausführungsbeispiels näher erläutert.

Die einzige Figur zeigt ein schematisches Flussdiagramm zur Veranschaulichung des erfindungsgemäßen Verfahrensablaufs.

Zur Fertigung von Lagerbauteilen nach dem erfindungsgemäßen Verfahren wird in einem ersten Schritt S1 eine geeignete Füllstoffzubereitung hergestellt, die als chemisch reaktiven Anteil eine Mischung im Atomverhältnis Silizium zu Metall von insgesamt größer 2:1, d.h. zugunsten von Silizium verschoben, enthält. Weitere chemisch reaktive oder inerte Füllstoffe können ebenfalls hinzugefügt werden. Wie ihr Volumenanteil ist auch eine kleine Korngröße speziell der chemisch reaktiven Komponenten für die Kontrolle und Minimierung der bei der pyrolytischen Polymer-Keramik-Umsetzung auftretenden, mit der Dichtezunahme verbundenen Schwindung wesentlich. Deshalb wird der chemisch reaktive Füllstoff in Pulverform mit Korngrößen um 1 µm bis mehrere 10 µm verwendet, während der inerte Füllstoff (z. B. Bornitrid, Siliziumnitrid, letzteres speziell zur Verbesserung der Reaktionskinetik bei der Bildung von Siliziumnitrid) auch als gröberes Pulver vorliegen kann. Die Aufbereitung des Füllstoffs kann etwa Prozessschritte wie Reinigung, Mischung, Mahlen (z. B. mit Erzeugung einer Vormischung aus Füllstoffpulver mit etwas metallorganischer Vorstufe), Sieben, Beschichtung (z. B. Silan, Polymervorstufe: etwa mittels Fällungstechniken, speziell zur Aufnahme höherer Volumenanteile an Füllstoff) und Vorlösung umfassen. Schließlich können, insbesondere zur Verbesserung der mechanischen Eigenschaften (hier speziell Risswiderstand, Risszähigkeit, Ermüdungsbeständigkeit, Verschleißwiderstand, Härte) des keramischen Endprodukts, feinverteiltes Zirkonoxid und/oder Aluminiumoxid und/oder Siliziumcarbid zugegeben sowie Fasern eingesetzt werden, wobei sich Kurzfasern auch wegen der damit verbundenen geringeren Kosten bevorzugt eignen. Der elektrische Widerstand lässt sich ebenfalls über eine geeignete Auswahl der Füllstoffkombination und der Zusammensetzung des verwendeten Polymers (z. B. Kohlenstoff- und Sauerstoffgehalt) einstellen, da die Leitfähigkeit mit geringerem Kohlenstoff- bzw. Karbidanteil in der erzeugten Keramik abnimmt. Ähnlich können die weiteren Werkstoffeigenschaften, wie der thermische Ausdehnungskoeffizient, die Wärmeleitfähigkeit, der Elastizitätsmodul oder das magnetische Verhalten, beeinflusst werden.

In einem zweiten Schritt S2 wird aus dem so vorbereiteten Füllstoff und mindestens einer flüssigen oder festen metallorganischen Verbindung als präkeramischer Vorstufe ein Stoffgemisch hergestellt. Als metallorganische Verbindung eignen sich insbesondere vernetzende siliziumorganische Verbindungen, wobei in dem im folgenden weiter beschriebenen Ausführungsbeispiel als bevorzugtes Polysiloxan ein Polysilsesquioxan (z. B. Methylpolysilsesquioxan, Vinylmethylphenylwasserstoffpolysilsesquioxan) zum Einsatz kommt. Die Anmischung des Stoffgemisches, je nach Form des Polysilsesquioxans (flüssig mit unterschiedlicher Viskosität oder fest) und Volumenanteil des Füllstoff (typischerweise um 30 % bis 50 %) z. B. in eine Suspension, Lösungsmitteldispergierung, Warmflüssig- oder Trockenmischung, kann etwa durch Kneten, Rühren, Intensivmischen o. ä. erfolgen, wobei sich je nach Form des Stoffgemisches in Schritt S3 als Nachbereitung eine Entgasung, Trocknung bzw. Extrusion und Granulierung anschließen kann. Auf Homogenität der Mischung ist besonders zu achten.

In einem auf Schritt S3 folgenden Schritt S4 wird das Stoffgemisch einer bereits grob an der Kontur des herzustellenden Lagerbauteils orientierten Formgebung unterzogen. Dies kann etwa durch Gießen (z. B. drucklos, Heißguss, Spritzguss) oder Pressen erfolgen. Dabei ist auf Homogenität und kompakte Ausfüllung der gewählten Form zu achten. Wenn beispielsweise rollenförmige Wälzkörper hergestellt werden sollen, so eignet sich eine Form, mit der ein Rundstab geformt werden kann. Die Form kann aber auch so ausgebildet sein, dass das Stoffgemisch zu einem Rohr geformt wird, aus dem Ringe für Wälzlager oder für Gleitlager hergestellt werden. Im Prinzip lassen sich alle gängigen Formen von Lagerbauteilen, wie beispielsweise Wälzkörpern oder Lagerringen bzw. von Halbzeugen zur Herstellung von Lagerbauteilen realisieren.

An Schritt S4 schließt sich ein Schritt S5 an, in dem das Stoffgemisch in der Form unter Ausnutzung der Vernetzungsmechanismen des verwendeten Polysilsesquioxans (z. B. Additions- oder Kondensationsvernetzung) zu einem sogenannten Grünbauteil ausgehärtet wird. Dies geschieht in der Regel wärmeinduziert bei einer Temperatur von ca. 100 °C bis 300 °C, wobei zusätzliche Druckeinwirkung (z. B. Warmpressen bei einigen 100 bar) vorliegen kann. Alternativ dazu kann die Vernetzung prinzipiell auch durch eine Bestrahlung bei Raumtemperatur sowie mit Hilfe von Zusätzen vollzogen werden. Die Bestrahlung kann auch ergänzend zur thermisch induzierten Vernetzung eingesetzt werden. In diesem Fall findet die Bestrahlung oberhalb Raumtemperatur statt.

Das Grünbauteil ist formstabil, aber noch vergleichsweise weich, so dass es sich leicht mechanisch bearbeiten lässt. Die endzustandsnahe mechanische Bearbeitung findet in einem Schritt S6 statt, der auf Schritt S5 folgt. Beispielsweise durch eine spanende Bearbeitung können bei geringem Werkzeugverschleiß aus dem Grünbauteil ein oder mehrere Wälzlagerbauteile hergestellt werden, wobei im Hinblick auf die gewünschten Endmaße nur ein geringer Zuschlag für eine abschließende Feinbearbeitung erforderlich ist. So können zur Herstellung von Zylinderrollen aus einem Rundstab einzelne Abschnitte abgestochen werden und durch Drehen und/oder Schleifen auf gewünschte Grobabmessungen der Zylinderrolle gebracht werden. Die Feinbearbeitung (z. B. Schleifen, Honen, Läppen), mit der die Endmaße und die gewünschte Oberflächentopographie hergestellt werden, erfolgt zu einem späteren Zeitpunkt des Verfahrens.

Wenn die Grobbearbeitung des Grünbauteils abgeschlossen ist, wird es in einem Schritt S7 einer Reaktionspyrolyse unterzogen, durch die das vernetzte Stoffgemisch des mechanisch bearbeiteten Grünbauteils in eine Keramik umgewandelt wird (Keramisierung). Die Reaktionspyrolyse (Thermolyse) wird im bevorzugten Ausführungsbeispiel druckgesteuert in einer Stickstoffatmosphäre durchgeführt, wobei für die einzelnen Schritte jeweils ein Stickstoffüberdruck üblicherweise im Bereich einiger bar bis ungefähr 50 bar (höhere Drücke sind möglich, doch wird das Verfahren dadurch weniger wirtschaftlich) gewählt wird. Die Temperatur beträgt während der ab etwa 400 °C einsetzenden Reaktionspyrolyse nach einem oder mehreren möglichen Zwischenschritten im Bereich um ca. 600 °C mit insgesamt etwa 1 Stunde Haltezeit, bei denen Stickstoffüberdruck zur Ausnutzung vorübergehender offener Porosität für die Reaktion mit dem chemisch reaktiven Füllstoff besonders wichtig ist, typischerweise 1500 °C über beispielsweise 6 Stunden, wobei hier ebenfalls ein temperaturgesteuerter Prozess in mehreren Schritten möglich ist. Prinzipiell können auch niedrigere Temperaturen von beispielsweise 1000 °C gewählt werden. Dann ist aber damit zu rechnen, dass noch ein gewisser, mit sinkender Temperatur zunehmender Anteil an Restpolymer in dem derart herstellten Keramikmaterial vorhanden ist. Zur Herstellung einer qualitativ hochwertigen Keramik sind in der Regel Temperaturen zwischen 1200 °C und 1500 °C erforderlich. Es sind aber auch höhere Temperaturen bis ca. 1700 °C möglich, so dass insgesamt ein Temperaturbereich von ca. 1000 °C bis 1700 °C für den ein- oder mehrstufigen Prozess in Frage kommt (aus wirtschaftlichen Gründen sind Temperaturen nicht über ca. 1400 °C bis 1500 °C grundsätzlich vorzuziehen). Unter den geschilderten Reaktionsbedingungen wird das vernetzte Grünbauteil zu einem keramischen Material auf der Basis von Siliziumnitrid umgewandelt und der in der organische Vorstufe enthaltene Sauerstoff weitgehend ausgetrieben. Das so hergestellte keramische Produkt weist eine mikroskopische Strukturierung und nur geringe Porosität, typischerweise in der Größenordnung maximal weniger Prozent, auf, die zudem geschlossen und sehr fein verteilt ist. Neben dem Hauptanteil Siliziumnitrid enthält der erzeugte keramische Verbundwerkstoff vorwiegend Carbide sowie eine geringe Menge an Restsauerstoff, der insbesondere oxidisch gebunden ist, und an metallischen Komponenten. Je nach verwendeter Füllstoffkombination (z. B. Oxide wie Aluminium- und Zirkonoxid; auch z. B. Aluminium als chemisch reaktive Füllerkomponente zur Bildung von Aluminiumoxid mit dem im Polymer enthaltenen Sauerstoff) und Prozessführung können auch Keramiken mit höherem Sauerstoffgehalt gezielt und materialoptimiert hergestellt werden.

Im Rahmen der Reaktionspyrolyse reagieren die Komponenten des Stoffgemisches bzw. die Zersetzungsfragmente der Polymermatrix sowohl untereinander als auch mit der umgebenden Stickstoffatmosphäre. Dadurch ist es möglich, die mit der Dichtezunahme und dem (Kohlen-) Wasserstoffentzug der Polymere des vernetzten Stoffgemisches verbundene Schwindung durch eine entsprechende Volumenzunahme insbesondere durch mit Expansion verbundene chemische Reaktionen des Füllstoffs zu kompensieren, so dass letztendlich das Gesamtvolumen nahezu unverändert bleibt. Allerdings können speziell bei der Herstellung einfacher Formkörper, wie im beschriebenen Ausführungsbeispiel Wälzkörper, wegen der günstigen Geometrie zur Verfahrensvereinfachung auch kontrolliert größere Schrumpfungen auf ein gewünschtes Zielmaß zugelassen werden. Wesentlich für eine (nahezu) schwindungsfreie Bauteilkeramisierung ist insbesondere ein hinreichend großes Verhältnis zwischen Oberfläche und Volumen des chemisch reaktiven Füllstoffpulvers, weshalb die verwendete Korngröße im Bereich um 1 µm bis mehrere 10 µm liegt. In diesem Zusammenhang können zur Optimierung des Verfahrens weitere chemisch reaktive Füllstoffe, wie beispielsweise Aluminium, Bor oder Chrom, und darüber hinaus auch chemisch inerte Füllstoffe, wie etwa Siliziumnitrid oder Bornitrid, eingesetzt werden. Dabei können Inertfüllstoffpulver mit größerer Korngröße und/oder Fasern (speziell Kurzfasern) sowie feinverteiltes Zirkonoxid, Aluminiumoxid und/oder Siliziumcarbid eingebracht werden. Die Wahl geeigneter Füllstoffkombinationen, Polymerzusammensetzungen und Pyrolysebedingungen (Druck- und Temperaturregelung) erlaubt eine sehr effiziente Werkstoffoptimierung (z. B. Ermüdungs- und Verschleißverhalten, mechanische Kennwerte, elektrische Leitfähigkeit, thermischer Ausdehnungskoeffizient, Wärmeleitfähigkeit). Nach der Reaktionspyrolyse kann sich ein konventionelles Nachsintern zur weiteren Verbesserung der Materialeigenschaften anschließen.

Zur Herstellung der endgültigen Form des Lagerbauteils schließt sich an Schritt S7 ein Schritt S8 an, in dem eine mechanische Feinbearbeitung der Oberfläche des Keramikkörpers etwa mit Diamantwerkzeug erfolgt, so dass in einem Schritt S9 als Endprodukt das Lagerbauteil vorliegt, wie zuvor geschildert im bevorzugten Ausführungsbeispiel bestehend aus einer Keramik basierend auf Siliziumnitrid. Bei der Feinbearbeitung kann es sich beispielsweise um Schleif-, Hon- und/oder Läppprozesse handeln, bei denen die Abmessungen des Lagerbauteils auf die gewünschten Endwerte gebracht werden und/oder die gewünschte Oberflächentopographie (speziell Rauhigkeit), insbesondere im Bereich der Wälz- bzw. Gleitflächen hergestellt wird. Zur Verbesserung der mechanischen Eigenschaften kann das keramisierte Lagerbauteil auch kugelgestrahlt werden, wodurch risshemmende Druckeigenspannungen im Randbereich eingebracht werden. Dies kann vor oder nach der mechanischen Feinbearbeitung erfolgen.

## Patentansprüche

1. Verfahren zur Herstellung keramischer Lagerbauteile, **dadurch gekennzeichnet, dass** ein Stoffgemisch aus:
- einer metallorganischen Verbindung als präkeramische Vorstufe und
- einem chemisch reaktiven Füllstoff hergestellt wird,
das Stoffgemisch einer Reaktionspyrolyse unterzogen wird und **dadurch** in keramisches Material überführt wird, wobei als chemisch reaktiver Füllstoff:
- Silizium in Form einer Legierung und ein Metall in Elementform, in Form einer Legierung, in Form einer intermetallischen Phase oder in Form einer beliebigen chemischen Verbindung eingesetzt wird, und
wobei das Atomverhältnis von Metallzu Silizium im Stoffgemisch kleiner als 1:2, insgesamt auf der Seite von Silizium

2. Verfahren nach Anspruch 1, **dadurch gekennzeichnet, dass** das Stoffgemisch eine vernetzende metallorganische Verbindung als präkeramische Vorstufe enthält.

3. Verfahren nach einem der vorhergehenden Ansprüche, **dadurch gekennzeichnet, dass** das Stoffgemisch eine siliziumorganische Verbindung als präkeramische Vorstufe enthält.

4. Verfahren nach Anspruch 3, **dadurch gekennzeichnet, dass** das Stoffgemisch ein Silicon oder Polysiloxan als präkeramische Vorstufe enthält.

5. Verfahren nach Anspruch 3, **dadurch gekennzeichnet, dass** das Stoffgemisch ein Siliconharz oder Polysilsesquioxan als präkeramische Vorstufe enthält.

6. Verfahren nach einem der vorhergehenden Ansprüche, **dadurch gekennzeichnet, dass** das Stoffgemisch ein Metallsilizid als chemisch reaktiven Füllstoff enthält.

7. Verfahren nach einem der vorhergehenden Ansprüche, **dadurch gekennzeichnet, dass** als Metall ein Übergangsmetall verwendet wird.

8. Verfahren nach einem der vorhergehenden Ansprüche, **dadurch gekennzeichnet, dass** als Metall Eisen verwendet wird.

9. Verfahren nach einem der vorhergehenden Ansprüche, **dadurch gekennzeichnet, dass** als Metall Aluminium verwendet wird.

10. Verfahren nach einem der vorhergehenden Ansprüche, **dadurch gekennzeichnet, dass** der chemisch reaktive Füllstoff in Pulverform mit einer Korngröße im Bereich um 1 µm bis mehrere 10 µm verarbeitet wird.

11. Verfahren nach einem der vorhergehenden Ansprüche, **dadurch gekennzeichnet, dass** das Stoffgemisch einen Inertfüllstoff enthält.

12. Verfahren nach einem der vorhergehenden Ansprüche, **dadurch gekennzeichnet, dass** das Stoffgemisch Fasern zur Verbesserung der mechanischen Eigenschaften enthält.

13. Verfahren nach Anspruch 12, **dadurch gekennzeichnet, dass** das Stoffgemisch Kurzfasern enthält.

14. Verfahren nach einem der vorhergehenden Ansprüche, **dadurch gekennzeichnet, dass** das Stoffgemisch Zirkonoxid und/oder Aluminiumoxid und/oder Siliziumcarbid und/oder Siliziumnitrid zur Verbesserung der mechanischen Eigenschaften und/oder der Reaktionskinetik enthält.

15. Verfahren nach einem der vorhergehenden Ansprüche, **dadurch gekennzeichnet, dass** die Reaktionspyrolyse wenigstens teilweise in einer chemisch reaktiven Gasatmosphäre durchgeführt wird.

16. Verfahren nach Anspruch 15, **dadurch gekennzeichnet, dass** die Reaktionspyrolyse in einer Stickstoffatmosphäre durchgeführt wird.

17. Verfahren nach einem der vorhergehenden Ansprüche, **dadurch gekennzeichnet, dass** die Reaktionspyrolyse wenigstens teilweise in einer chemisch inerten Gasatmosphäre oder im Vakuum durchgeführt wird.

18. Verfahren nach einem der vorhergehenden Ansprüche, **dadurch gekennzeichnet, dass** die Reaktionspyrolyse unter Überdruck durchgeführt wird.

19. Verfahren nach den Anspruch 18, **dadurch gekennzeichnet, dass** die Reaktionspyrolyse unter Überdruck im Bereich von einigen bar bis einigen 100 bar durchgeführt wird.

20. Verfahren nach einem der vorhergehenden Ansprüche, **dadurch gekennzeichnet, dass** während der Reaktionspyrolyse der Druck variiert wird.

21. Verfahren nach einem der vorhergehenden Ansprüche, **dadurch gekennzeichnet, dass** die Reaktionspyrolyse bei einer Temperatur zwischen 1000 °C und 1700 °C, bevorzugt zwischen 1200 °C und 1500 °C, durchgeführt wird.

22. Verfahren nach Anspruch 21, **dadurch gekennzeichnet, dass** während der Reaktionspyrolyse die Temperatur variiert wird.

23. Verfahren nach einem der vorhergehenden Ansprüche, **dadurch gekennzeichnet, dass** im Rahmen der Reaktionspyrolyse vorab wenigstens eine Wärmebehandlung im Bereich von 400 °C bis 1000 °C durchgeführt wird.

24. Verfahren nach Anspruch 23, **dadurch gekennzeichnet, dass** die Wärmebehandlung mit einer Haltezeit in der Größenordnung 1 Stunde durchgeführt wird.

25. Verfahren nach einem der vorhergehenden Ansprüche, **dadurch gekennzeichnet, dass** vor der Reaktionspyrolyse eine grob am Lagerbauteil orientierte Formgebung des Stoffgemisches und eine Stabilisierung durch Aushärtung der metallorganischen Vorstufe im Stoffgemisch durchgeführt wird.

26. Verfahren nach Anspruch 25, **dadurch gekennzeichnet, dass** die Aushärtung durch Wärmeeinwirkung bei einer Temperatur von etwa 100 °C bis 300 °C durchgeführt wird.

27. Verfahren nach einem der Ansprüche 25 oder 26, **dadurch gekennzeichnet, dass** die Aushärtung durch Strahlungseinwirkung vollzogen wird.

28. Verfahren nach einem der Ansprüche 25 bis 27, **dadurch gekennzeichnet, dass** die Aushärtung unter Druck durchgeführt wird.

29. Verfahren nach einem der Ansprüche 25 bis 28, **dadurch gekennzeichnet, dass** im Rahmen der Aushärtung aus dem Stoffgemisch ein formstabiles Halbzeug hergestellt wird, aus dem vor Durchführung der Reaktionspyrolyse durch mechanische Bearbeitung die Lagerbauteile endzustandsnah gefertigt werden.

30. Verfahren nach einem der vorhergehenden Ansprüche, **dadurch gekennzeichnet, dass** die Bestandteile des Stoffgemisches so aufeinander abgestimmt werden, dass bei der Durchführung der Reaktionspyrolyse keine nennenswerten Schwindungen auftreten oder eine kontrollierte, an der Weiterbearbeitung des Lagerbauteils orientierte Volumenänderung erzielt wird.

31. Verfahren nach einem der vorhergehenden Ansprüche, **dadurch gekennzeichnet, dass** sich an die Reaktionspyrolyse ein Nachsintern anschließt.

32. Verfahren nach einem der vorhergehenden Ansprüche, **dadurch gekennzeichnet, dass** nach Durchführung der Reaktionspyrolyse, mit oder ohne Nachsintern, eine mechanische Feinbearbeitung der keramisierten Lagerbauteile erfolgt.

33. Verfahren nach einem der vorhergehenden Ansprüche, **dadurch gekennzeichnet, dass** nach Durchführung der Reaktionspyrolyse, mit oder ohne Nachsintern und vor oder nach der mechanischen Feinbearbeitung, ein Kugelstrahlen der keramisierten Lagerbauteile erfolgt.

## Claims

1. Process for producing ceramic bearing components, **characterized in that** a substance mixture of:
- an organometallic compound as preceramic precursor and
- a chemically reactive filler is produced,
the substance mixture is subjected to a reaction pyrolysis and is thereby converted into ceramic material, wherein the chemically reactive filler used is:
- silicon in the form of an alloy and a metal in element form, in the form of an alloy, in the form of an intermetallic phase or in the form of any desired chemical compound, and
wherein the atomic ratio of metal to silicon in the substance mixture is less than 1:2, in total on the part of silicon.

2. Process according to Claim 1, **characterized in that** the substance mixture contains a crosslinking organometallic compound as preceramic precursor.

3. Process according to either of the preceding claims, **characterized in that** the substance mixture contains an organosilicon compound as preceramic precursor.

4. Process according to Claim 3, **characterized in that** the substance mixture contains a silicone or polysiloxane as preceramic precursor.

5. Process according to Claim 3, **characterized in that** the substance mixture contains a silicone resin or polysilsesquioxane as preceramic precursor.

6. Process according to one of the preceding claims, **characterized in that** the substance mixture contains a metal silicide as chemically reactive filler.

7. Process according to one of the preceding claims, **characterized in that** the metal used is a transition metal.

8. Process according to one of the preceding claims, **characterized in that** the metal used is iron.

9. Process according to one of the preceding claims, **characterized in that** the metal used is aluminium.

10. Process according to one of the preceding claims, **characterized in that** the chemically reactive filler is processed in powder form having a grain size in the range of about 1 µm to several tens of micrometres.

11. Process according to one of the preceding claims, **characterized in that** the substance mixture contains an inert filler.

12. Process according to one of the preceding claims, **characterized in that** the substance mixture contains fibres in order to improve the mechanical properties.

13. Process according to Claim 12, **characterized in that** the substance mixture contains short fibres.

14. Process according to one of the preceding claims, **characterized in that** the substance mixture contains zirconium oxide and/or aluminium oxide and/or silicon carbide and/or silicon nitride in order to improve the mechanical properties and/or the reaction kinetics.

15. Process according to one of the preceding claims, **characterized in that** the reaction pyrolysis is carried out at least partially in a chemically reactive gas atmosphere.

16. Process according to Claim 15, **characterized in that** the reaction pyrolysis is carried out in a nitrogen atmosphere.

17. Process according to one of the preceding claims, **characterized in that** the reaction pyrolysis is carried out at least partially in a chemically inert gas atmosphere or in vacuo.

18. Process according to one of the preceding claims, **characterized in that** the reaction pyrolysis is carried out under an excess pressure.

19. Process according to Claim 18, **characterized in that** the reaction pyrolysis is carried out under an excess pressure in the range of several bars to several hundred bars.

20. Process according to one of the preceding claims, **characterized in that** the pressure is varied during the reaction pyrolysis.

21. Process according to one of the preceding claims, **characterized in that** the reaction pyrolysis is carried out at a temperature between 1000°C and 1700°C, preferably between 1200°C and 1500°C.

22. Process according to Claim 21, **characterized in that** the temperature is varied during the reaction pyrolysis.

23. Process according to one of the preceding claims, **characterized in that** at least one heat treatment in the range of 400°C to 1000°C is carried out in advance as part of the reaction pyrolysis.

24. Process according to Claim 23, **characterized in that** the heat treatment is carried out with a holding time in the order of magnitude of 1 hour.

25. Process according to one of the preceding claims, **characterized in that** the reaction pyrolysis is preceded by shaping of the substance mixture in a manner oriented roughly to the bearing component, and by stabilization by hardening the organometallic precursor in the substance mixture.

26. Process according to Claim 25, **characterized in that** the hardening is carried out by the action of heat at a temperature of about 100°C to 300°C.

27. Process according to either of Claims 25 and 26, **characterized in that** the hardening is carried out by the action of radiation.

28. Process according to one of Claims 25 to 27, **characterized in that** the hardening is carried out under pressure.

29. Process according to one of Claims 25 to 28, **characterized in that** a dimensionally stable semi-finished product is produced from the substance mixture as part of the hardening, and the bearing components are produced almost to their final condition from said semi-finished product by mechanical processing before the reaction pyrolysis is carried out.

30. Process according to one of the preceding claims, **characterized in that** the constituents of the substance mixture are matched to each other in such a way that, when the reaction pyrolysis is carried out, no significant shrinkage occurs or a controlled volume change which is oriented to the further processing of the bearing component is achieved.

31. Process according to one of the preceding claims, **characterized in that** the reaction pyrolysis is followed by subsequent sintering.

32. Process according to one of the preceding claims, **characterized in that** the ceramicized bearing components are subjected to mechanical precision processing after the reaction pyrolysis has been carried out, with or without subsequent sintering.

33. Process according to one of the preceding claims, **characterized in that** the ceramicized bearing components are subjected to shot peening after the reaction pyrolysis has been carried out, with or without subsequent sintering, and before or after the mechanical precision processing.

## Revendications

1. Procédé de fabrication d'éléments paliers céramiques, **caractérisé en ce qu'**un mélange de substances constitué de :
- un composé métallo-organique en tant que précurseur pré-céramique et
- une charge chimiquement réactive, est fabriqué,
le mélange de substances est soumis à une pyrolyse réactive, et ainsi transformé en un matériau céramique,
- du silicium sous la forme d'un alliage et un métal sous forme élémentaire, sous la forme d'un alliage, sous la forme d'une phase intermétallique ou sous la forme d'un composé chimique quelconque, étant utilisés en tant que charge chimiquement réactive, et
le rapport atomique entre le métal et le silicium dans le mélange de substances étant inférieur à 1:2, au total du côté du silicium.

2. Procédé selon la revendication 1, **caractérisé en ce que** le mélange de substances contient un composé métallo-organique réticulant en tant que précurseur pré-céramique.

3. Procédé selon l'une quelconque des revendications précédentes, **caractérisé en ce que** le mélange de substances contient un composé de silicium organique en tant que précurseur pré-céramique.

4. Procédé selon la revendication 3, **caractérisé en ce que** le mélange de substances contient une silicone ou un polysiloxane en tant que précurseur pré-céramique.

5. Procédé selon la revendication 3, **caractérisé en ce que** le mélange de substances contient une résine de silicone ou un polysilsesquioxane en tant que précurseur pré-céramique.

6. Procédé selon l'une quelconque des revendications précédentes, **caractérisé en ce que** le mélange de substances contient un siliciure métallique en tant que charge chimiquement réactive.

7. Procédé selon l'une quelconque des revendications précédentes, **caractérisé en ce qu'**un métal de transition est utilisé en tant que métal.

8. Procédé selon l'une quelconque des revendications précédentes, **caractérisé en ce que** le fer est utilisé en tant que métal.

9. Procédé selon l'une quelconque des revendications précédentes, **caractérisé en ce que** l'aluminium est utilisé en tant que métal.

10. Procédé selon l'une quelconque des revendications précédentes, **caractérisé en ce que** la charge chimiquement réactive est traitée sous la forme d'une poudre ayant une granulométrie dans la plage allant d'environ 1 µm à plusieurs dizaines de micromètres.

11. Procédé selon l'une quelconque des revendications précédentes, **caractérisé en ce que** le mélange de substances contient une charge inerte.

12. Procédé selon l'une quelconque des revendications précédentes, **caractérisé en ce que** le mélange de substances contient des fibres pour améliorer les propriétés mécaniques.

13. Procédé selon la revendication 12, **caractérisé en ce que** le mélange de substances contient des fibres courtes.

14. Procédé selon l'une quelconque des revendications précédentes, **caractérisé en ce que** le mélange de substances contient de l'oxyde de zirconium et/ou de l'oxyde d'aluminium et/ou du carbure de silicium et/ou du nitrure de silicium pour améliorer les propriétés mécaniques et/ou la cinétique de réaction.

15. Procédé selon l'une quelconque des revendications précédentes, **caractérisé en ce que** la pyrolyse réactionnelle est réalisée au moins en partie dans une atmosphère gazeuse chimiquement réactive.

16. Procédé selon la revendication 15, **caractérisé en ce que** la pyrolyse réactionnelle est réalisée dans une atmosphère d'azote.

17. Procédé selon l'une quelconque des revendications précédentes, **caractérisé en ce que** la pyrolyse réactionnelle est réalisée au moins en partie dans une atmosphère gazeuse chimiquement inerte ou sous vide.

18. Procédé selon l'une quelconque des revendications précédentes, **caractérisé en ce que** la pyrolyse réactionnelle est réalisée sous une surpression.

19. Procédé selon la revendication 18, **caractérisé en ce que** la pyrolyse réactionnelle est réalisée sous une surpression dans la plage allant de quelques bars à quelques centaines de bars.

20. Procédé selon l'une quelconque des revendications précédentes, **caractérisé en ce que** la pression est variée pendant la pyrolyse réactionnelle.

21. Procédé selon l'une quelconque des revendications précédentes, **caractérisé en ce que** la pyrolyse réactionnelle est réalisée à une température comprise entre 1 000 °C et 1 700 °C, de préférence entre 1 200 °C et 1 500 °C.

22. Procédé selon la revendication 21, **caractérisé en ce que** la température est variée pendant la pyrolyse réactionnelle.

23. Procédé selon l'une quelconque des revendications précédentes, **caractérisé en ce qu'**au moins un traitement thermique dans la plage allant de 400 °C à 1 000 °C est réalisé au préalable dans le cadre de la pyrolyse réactionnelle.

24. Procédé selon la revendication 23, **caractérisé en ce que** le traitement thermique est réalisé avec un temps de séjour de l'ordre de grandeur d'une heure.

25. Procédé selon l'une quelconque des revendications précédentes, **caractérisé en ce qu'**un façonnage du mélange de substances grossièrement orienté sur l'élément palier et une stabilisation par durcissement du précurseur métallo-organique dans le mélange de substances sont réalisés avant la pyrolyse réactionnelle.

26. Procédé selon la revendication 25, **caractérisé en ce que** le durcissement est réalisé par action de la chaleur à une température d'environ 100 °C à 300 °C.

27. Procédé selon l'une quelconque des revendications 25 ou 26, **caractérisé en ce que** le durcissement est accompli par action d'un rayonnement.

28. Procédé selon l'une quelconque des revendications 25 à 27, **caractérisé en ce que** le durcissement est réalisé sous pression.

29. Procédé selon l'une quelconque des revendications 25 à 28, **caractérisé en ce qu'**un produit semi-fini de forme stable est fabriqué à partir du mélange de substances dans le cadre du durcissement, à partir duquel les éléments paliers sont fabriqués presque à l'état final par traitement mécanique avant la réalisation de la pyrolyse réactionnelle.

30. Procédé selon l'une quelconque des revendications précédentes, **caractérisé en ce que** les constituants du mélange de substances sont accordés les uns avec les autres de manière à ce qu'aucun retrait important n'ait lieu lors de la réalisation de la pyrolyse réactionnelle ou à ce qu'une modification volumique contrôlée, orientée sur le traitement ultérieur de l'élément palier, soit réalisée.

31. Procédé selon l'une quelconque des revendications précédentes, **caractérisé en ce qu'**un frittage ultérieur suit la pyrolyse réactionnelle.

32. Procédé selon l'une quelconque des revendications précédentes, **caractérisé en ce qu'**un traitement de finition mécanique des éléments paliers céramisés a lieu après la réalisation de la pyrolyse réactionnelle, avec ou sans frittage ultérieur.

33. Procédé selon l'une quelconque des revendications précédentes, **caractérisé en ce qu'**un grenaillage des éléments paliers céramisés a lieu après la réalisation de la pyrolyse réactionnelle, avec ou sans frittage ultérieur, et avant ou après le traitement de finition mécanique.
